# EUROPEAN PATENT SPECIFICATION

(11) **EP 3 257 746 B1**
(45) Date of publication and mention of the grant of the patent: **13.05.2020**
(21) Application number: 16305707.8
(22) Date of filing: 13.06.2016
(51) Int. Cl.: B64C 13/40, B64C 13/50, F15B 7/00

(54) **ELECTRO HYDROSTATIC ACTUATORS**
ELEKTRISCHE HYDROSTATISCHE AKTUATOREN
ACTIONNEURS ÉLECTRO-HYDRAULIQUES

(43) Date of publication of application: 20.12.2017
(73) Proprietor: Goodrich Actuation Systems SAS, 95310 Saint-Ouen-l'Aumone (FR)
(72) Inventor: LESAGE, Emmanuel, 27180 AULNAY SUR ITON (FR); GRAND, Serge, 91140 VILLEBON-SUR-YVETTE (FR)
(74) Representative: Dehns

(56) References cited:
- EP-A1- 1 878 598
- CN-A- 103 722 996
- US-A1- 2016 076 558

## Description

### Technical Field

The present disclosure relates to electro hydrostatic actuators and in particular to those comprising an electrically powered motor-pump assembly to generate pressure and flow control for the hydraulic actuator.

### Background

An electro hydrostatic actuator (EHA) is a self-contained actuator run and controlled by its own electrically powered motor-pump assembly, thereby eliminating the need for a separate hydraulic pump. In aerospace applications, EHAs are typically a fly-by-wire (FBW) device that is operated by control electronics. The hydraulic actuator of an EHA may be used to move aerodynamic surfaces such as a steering flap on an aircraft wing. EHAs may replace conventional hydraulic actuator systems in an aircraft for various operations, including e.g. landing gear retraction/extension, steering, braking, and fluid control. EP 1878598 discloses a system which is capable of working in an active and/or a regenerative mode.

Especially when EHAs are used to control components of aircraft operation, it is important to provide redundancy in the event of electrical power generation failure or control path electronics failure. It has previously been proposed, for example as seen in US 2013/0067898, for an EHA to comprise a failsafe hydraulic circuit that includes additional hydraulic oil paths allowing communication between the jack chambers of the hydraulic actuator and a solenoid "mode" valve that can be switched to connect the additional hydraulic oil paths and allow for a bypass flow of hydraulic oil outside the electrically-powered hydraulic pump, e.g. in an emergency state of power loss. In such an emergency state, the hydraulic actuator is still able to provide a damping force to its aerodynamic surface. This damping effect is switched on or off by the additional solenoid valve in the hydraulic circuit.

The present disclosure seeks to provide improvements in an electro hydrostatic actuator.

### Summary

According to an aspect of this disclosure there is provided a method for controlling and damping the motion of a hydraulic actuator in an electro hydrostatic actuator (EHA) system as claimed in claim 1.

In the active mode of operation, when the pump is driven by the electric motor, the system operates normally with the hydraulic pump generating pressure and flow control for the hydraulic actuator. It will be understood that energising the electric motor means supplying electrical energy to the motor e.g. from a power supply. When the electric motor is not energized, e.g. in case of electrical power failure or control electronics failure, the system is switched to the damping mode of operation. In this mode of operation hydraulic fluid is able to flow from the hydraulic actuator, for example from a fluid chamber within the hydraulic actuator, through the hydraulic pump causing the hydraulic pump to effectively act in reverse, and drive the electric motor. As the hydraulic pump drives the electric motor, the electric motor generates energy. According to the method of the present disclosure, by determining the desired amount of damping to be applied to the hydraulic actuator and providing one or more energy consuming means it is possible to consume the energy generated by the electric motor as it is driven by the hydraulic pump. The energy consuming means effectively damps the operation of the electric motor when it is acting as a generator, consequently resisting the motion of the hydraulic pump. This restricts the rate at which the hydraulic fluid can flow through the pump and consequently damps the motion of the hydraulic actuator. The hydraulic pump may be considered to be reversible, i.e. the hydraulic pump can act to drive hydraulic fluid through the pump (e.g. in the active mode) or the hydraulic pump can be driven by the flow of hydraulic fluid through the pump (e.g. in the damping mode).

It will be understood that damping refers to resisting the motion of the hydraulic actuator, such that when an external force is applied to the hydraulic actuator it is not completely free to move from one extreme to the other in an uncontrolled manner. Damping effectively resists the motion, e.g. of a cylinder or ram in the actuator, and slows the movement of the actuator down such that it moves in a more controlled manner.

The method according to the present disclosure is particularly advantageous as it means that a typical bypass mode valve, which is a standard component of most EHA systems no longer needs to be provided within the system. This reduces the number of components in the EHA, as well as allowing an envelope reduction for the device. For example, the EHA may no longer require a separate solenoid mode valve with its own power supply and control electronics, and anti-cavitation valves. It will be appreciated that these cost, weight and space savings are particularly beneficial in aircraft. The associated flow path necessary in the hydraulic manifold will be consequently removed with a cost and weight reduction for the EHA. Furthermore, such an EHA may provide improved reliability due to the removal of two non-return valves (for anti-cavitation) and the bypass mode valve. Accordingly in some examples, the EHA system may be provided without a bypass mode valve. Additionally or alternatively, in some examples the EHA system may be provided without any anti-cavitation valves. Additionally, the method may be applied to standard hydraulic pumps and electric motors allowing it to be used in a wide range of EHAs.

It will be appreciated that the one or more energy consuming means may be able to consume one or more forms of energy including: kinetic energy, electrical energy or electromagnetic energy. The damping effect of the motor may be achieved by energy consumption that is internal and/or external to the motor.

In a set of examples, providing the one or more energy consuming means comprises choosing one or more electrical energy consuming elements. In a further set of examples providing the one or more electrical energy consuming means comprises choosing one or more electrical resistance elements. It will be appreciated that electrical resistance elements are particularly suitable as the electric motor effectively acts as a generator when it is driven by the hydraulic pump, i.e. in reverse, and providing the hydraulic pump drives the electric motor sufficiently it will generate electricity. It will therefore be appreciated that providing one or more dedicated electrical resistance elements is particularly suitable as they may be arranged to dissipate the electrical energy generated by the electric motor and thus resist its motion.

It will be appreciated that when the electric motor is said to be driven in reverse, this is referring to the electric motor being driven by the hydraulic pump rather than the electric motor driving the hydraulic pump. It should not be considered to refer to the direction in which the electric motor is driven.

When determining the desired amount of damping, the amount of damping may already be predefined for the system and as such in a further set of examples choosing the one or more electrical resistance elements comprises choosing one or more electrical resistance elements with a fixed resistance. Such a set of examples may be particularly useful, for example when the amount of damping is known during manufacture and as such appropriate electrical resistance elements can be chosen to provide the predefined desired amount of damping. In various examples wherein more than one electrical resistance element is provided, the elements may be arranged in series and/or in parallel with one another. However, it will be appreciated that determining the desired amount of damping may occur after the system has been installed, for example, once the system is in situ on an aircraft. Therefore, in a set of examples the one or more electrical resistance elements is/are chosen/changed/replaced so as to provide the desired amount of damping. This set of examples is advantageous as it allows modification of the amount of damping provided in the system, especially after manufacture and once the system has been installed.

It has been appreciated by the Applicant that it may not necessarily always be feasible to completely change the electrical resistance elements once the system is in situ, and thus in another set of examples choosing the electrical resistance elements comprises choosing one or more electrical resistance elements with a variable resistance. In a further set of examples the method comprises adjusting the resistance of the one or more electrical resistance elements depending on the desired degree of damping. This may allow the amount of damping to be adjusted after the system has been installed. Whilst this is advantageous for adjusting the damping once the system has been installed, for example if the system is not providing a sufficient amount of damping, it may also be particularly advantageous if a single system is produced which can be used in a variety of different applications which require different amounts of damping. In such a system the amount of damping for each application can easily be adjusted using the variable resistance electrical resistance elements.

In a set of examples, providing the one or more electrical resistance elements comprises providing a plurality of electrical resistance elements. Providing a plurality of electrical resistance elements may allow for the provision of different amounts of damping. For example, the system may be able to selectively switch between the use of different electrical resistance elements depending on the energy generated by the electric motor. In a further set of examples, the method comprises providing the plurality of electrical resistance elements in series with one another. In a yet further set of examples, the method comprises providing the plurality of electrical resistance elements in parallel with one another. It will be appreciated that by providing the electrical resistance elements in series and/or parallel with one another a more complicated damping effect can be achieved than just by providing a single electrical resistance element.

Providing the one or more electrical resistance elements may comprise providing the electrical resistance elements within the electric motor itself, for example within the motor casing. However, in a set of examples providing the one or more electrical resistance elements comprises connecting the one or more electrical resistance elements in an external electrical circuit connected to the electric motor. Such an example is beneficial as it facilitates the use of a standard electrical motor and thus reduces the cost of producing the system as a specific electric motor capable of housing the electrical resistance elements does not need to be designed and manufactured. This example also allows for the one or more electrical resistance elements to be easily swapped out of the electrical circuit, which may not be so easy if they were contained within the electric motor itself.

As discussed previously, the energy consuming means need not only be electrical energy consuming means and thus in another set of examples, in addition or alternatively, providing the one or more energy consuming elements comprises choosing one or more components of the electric motor to provide the one or more energy consuming elements. In a set of examples, this comprises providing motor components within the motor that provide one or more frictional energy consuming elements. This may, for example, comprise providing a motor shaft that experiences frictional resistance with other components of the electric motor. In another set of examples it comprises providing components within the electric motor that provide electromagnetic energy consuming means. This may, for example, comprise providing magnetic elements within the motor to consume the electromagnetic energy. In a set of examples, providing the one or more energy consuming means comprises designing electromagnetic losses within one or more components of the electric motor to provide the desired amount of damping. It will be appreciated that whilst both of these examples are feasible methods to provide the desired amount of damping, depending on the application of the system and other factors, including for example the power supply and desired lifespan of the system, they may not always be beneficial as they may introduce energy losses when the electric motor is being driven normally by the electric power supply in the active mode of operation, which may cause excessive consumption of power and/or undesirable wear.

In a set of examples, choosing the components to provide (e.g. friction or electromagnetic) energy consuming means comprises choosing standard components of the motor which provide the desired amount of damping. It will be appreciated that this set of examples may be particularly advantageous as it allows a standard motor to be used with the simple changing of some of its basic components. In a set of examples, choosing the components to provide energy dissipation in the motor comprises providing additional components within the motor. This set of examples may be advantageous as the changing of standard components in the motor may be restricted so as to ensure that the electric motor remains functional in the active mode of operation.

Choosing components within the electric motor to provide the energy consuming means may be advantageous as it may be possible to use an existing thermal dissipator, which may already be present in a standard electric motor, in order to dissipate any heat generated by the energy consuming means. This is advantageous when contrasted to examples wherein the energy consuming means are provided separate to the electric motor, as these examples may require an additional thermal dissipator in order to dissipate any heat which may be generated by the energy consuming means. This may, for example, be necessary when electrical resistance elements are connected externally to the motor.

The one or more energy consuming means need not necessarily dissipate the energy which it/they consumes. Therefore, in a set of examples, providing the one or more energy consuming means comprises choosing one or more components capable of storing electrical energy. It will be appreciated that dissipating the energy away from the system is not always necessarily ideal as for example it may cause excessive heating which may cause damage to the system. Thus, this set of examples helps to minimise this risk by storing the energy. The electrical energy stored may then advantageously go on to be used for power injection. Thus in a further set of examples, the method comprises using the electrical energy stored within the one or more components to energise the electric motor so as to drive the hydraulic pump in the active mode of operation. It will also be appreciated that, depending on the amount of energy which is produced by the electric motor, and stored, in the damping mode of operation, the stored electrical energy may be used to energise or power one or more other components which are not necessarily part of the hydraulic actuator system. Additionally or alternatively, providing the one or more energy consuming means may comprise choosing one or more components capable of distributing electrical energy to other components. This may, for example, comprise distributing energy to other EHAs or other associated components.

It will be appreciated by those skilled in the art that providing the desired amount of damping may not solely consist of providing distinct energy consuming means which are able to consume e.g. electrical, electromagnetic or kinetic energy. Instead, it may, for example, comprise a combination of different energy consuming means which are able to consume different types of energy.

It has been appreciated by the Applicant that generally it may be desirable to bypass the energy consuming means in the active mode of operation, in order to avoid potentially wasting energy. Therefore in a set of examples, providing the one or more energy consuming means also comprises providing bypassing means which are arranged to allow the electric motor to be energised in the active mode of operation without the energy consuming means consuming energy. The Applicant has appreciated that choice of bypassing means will vary depending on the type of energy consuming means. For example, if the energy consuming means is provided by an electrical resistance element, the bypassing means may comprise a switch arranged between the electrical resistance element and the motor so as to be 'OFF' in the active mode of operation, i.e. so that it cannot consume electrical energy, and 'ON' in the damping mode of operation so that electrical energy generated by the motor can be consumed by the electrical resistance element. Various other different types of bypassing means may be provided.

The energy consuming means may be selectively connected to the electric motor such that in the active mode of operation the energy consuming means is disconnected and in the damping mode of operation the energy consuming means is connected. Preferably the system defaults to the damping mode of operation in the event of a loss of power. For example in the case of an electrical switch, a solenoid may be energised to disconnect the energy consuming means during active mode of operation and when de-energised will connect the energy consuming means for damping mode of operation.

The amount of damping to be applied to the hydraulic actuator may be determined using computational models which model the forces applied to an actuator and the expected energy which is generated by the electric motor as it is driven by the pump. These models may then be used to choose appropriate energy consuming elements. However, in accordance with this disclosure, determining the desired amount of damping comprises determining the force which is applied to the hydraulic actuator by measuring the actual energy generated by the electric motor. Measuring the energy in such a way is expected to directly correspond to the force applied to the hydraulic actuator. Determining the amount of damping in this manner is particularly advantageous as it is done so on a real system rather than a computer model and thus takes into account all of the real-life factors which occur in the system which can't always be modelled using computational software. The electronic control circuitry is arranged so as to provide the one or more energy consuming means to provide the determined amount of damping.

Whilst the electric motor will generate various forms of energy, for example kinetic, electromagnetic and electrical, it will be appreciated that measuring the electrical energy generated by the electric motor is a simple way to implement determining the amount of damping on an actual system. In accordance with this disclosure, measuring the energy generated by the electric motor comprises applying electronic control circuitry arranged to measure the electrical energy generated by the electric motor.

The damping mode of operation in the present disclosure is used in the case of a system failure, for example electrical supply failure or control electronics failure. Therefore, in a set of examples using the electronic control circuitry further comprises providing a separate power supply for the electronic control circuitry. It will be appreciated that this separate power supply may be solely for use by the electronic control circuitry. Providing a separate power supply for the electronic control circuitry ensures that the system is able to operate in the damping mode of operation even in the event of a main power failure.

The Applicant has further appreciated that electrical energy generated by the electrical motor may be used to power the electronic control circuitry. Therefore, in accordance with this disclosure, providing the electronic control circuitry comprises arranging components of the electronic control circuitry so as to be powered by the electrical energy generated by the electric motor. This is advantageous as it ensures that the electronic control circuitry will be able to operate in the damping mode of operation and thus determine the amount of damping to be applied.

The amount of damping desired will vary depending on the application of the hydraulic actuator, it may also vary depending on the force which is applied. For example, if a small external force is applied to the hydraulic actuator it may only be necessary to apply a small amount of damping, whereas, if a large external force is applied to the hydraulic actuator it may be necessary to apply a larger amount of damping. Therefore using electronic control circuitry to determine the amount of damping is particularly advantageous as an appropriate amount of damping can be applied for each specific instance.

It will be appreciated that in any examples according to the present disclosure the skilled person would understand how to determine the desired amount of damping to be applied to the hydraulic actuator. For a hydraulic actuator, the damping factor is typically the ratio of actuator load to actuator speed squared. In typical aerospace applications the damping factor is usually set between 0.05 to 5 daN/mm² at ambient temperature. In use the damping factor will vary from its nominal value mainly due to temperature variations. The temperature will impact fluid viscosity, motor and electronic behaviour and as a result the damping factor may vary a lot from its nominal value (±10 to 100%). However the skilled person can at least model likely temperature fluctuations and/or collect empirical data so as to determine a required range for the damping factor in any given actuator application. This damping factor may then be used to provide the electric motor with appropriate energy consuming means.

Depending on the application of the hydraulic actuator, it may be desirable for the amount of damping to be non-linear, for example the amount of damping may initially be small, and then increase as the hydraulic actuator is moved further. This may be beneficial in reducing stresses and strains experienced by the components in the system. For example, if a sudden external force is applied to the hydraulic actuator, if a large amount of damping is instantly applied it may cause significant shocks to the components of the system which may cause them to weaken and potentially become damaged. Therefore, for example, a smaller initial amount of damping may be applied which subsequently increases, this may allow for more controlled damped motion of the hydraulic actuator and prevent any damage to the system. Therefore, in a set of examples the method comprises providing the electric motor with one or more energy consuming means that provide a non-linear amount of damping over the motion of the hydraulic actuator under the application of the external force. Whilst the above the scenario is discussed in the case of the amount of damping gradually increasing it will be appreciated that this may not always be appropriate and the amount of damping may start at a higher level and reduce to a lower level during the motion of the hydraulic actuator. Furthermore, the amount of damping may vary in a more complicated manner, for example, going from high to low and back to high again.

Whilst only two modes of operation have been described in the method according to the present disclosure, the active mode and the damping mode, the hydraulic actuator may be driven in further, different, modes of operation. For example, the system may operate in a mode in which the pump is not actively driven by the electric motor but hydraulic fluid may still flow around the hydraulic fluid circuit, for example due to an external force acting on the hydraulic actuator. This may be facilitated by additional valves to selectively close the circuit so as to provide a third "bypass" mode as in the prior art. However, in a preferred set of examples, controlling and damping the hydraulic actuator comprises operating the system only in the active mode of operation or the damping mode of operation. Operating the system purely in these two single modes of operation ensures that the system remains relatively simple and thus reduces the risks of problems which may arise, this aligns with the general idea of improving the robustness of such systems.

In a set of examples, determining the desired amount of damping and providing the one or more energy consuming means is carried out during manufacture of the system. This is particularly advantageous when the use of the system is known during manufacture as the system can be tailored specifically for its use. However, it has been appreciated by the Applicant that this is not always necessarily the case and sometimes the systems are produced so as to be generic and capable of being used in a variety of different applications. Therefore, in another set of examples determining the amount of damping and providing the one or more energy consuming means is carried out prior to use of the system in a specific application. It will be appreciated that the systems in these examples are provided with the means for providing the one or more energy consuming means.

The amount of damping which is desired may not always be known in advance of the actual use of the system and sometimes the amount of damping may require adjustment during use of the system. Therefore, in another set of examples determining the desired amount of damping and providing the one or more energy consuming means is carried out during use of the hydraulic actuator. Such a set of examples is advantageous as it allows the system to be fine-tuned so as to be more appropriate for the application in which it is used. This is useful as, whilst in many situations the amounts of damping that may be necessary for the hydraulic actuator can be determined using complex computational models, these may not always be completely accurate and thus this example allows for further tuning of the system to make it more suitable.

As discussed generally above, the method according to the present disclosure may be applied to the system during manufacture or whilst the system is in situ. This is generally in reference to brand new systems, however it has been appreciated by the Applicant that the method may also be applied to an already existing system which is in situ or otherwise. Therefore, in a set of examples the method further comprises retrofitting the one or more energy consuming means to an existing system.

In a set of examples, the electric motor and hydraulic pump are chosen to be able to be highly reliable. This may, for example, comprise choosing an electric motor and hydraulic pump that are made from materials which are particularly reliable and robust. It may also, for example, comprise choosing an electric motor and hydraulic pump in which the general wear within the components is minimal. These examples are advantageous when combined with the present disclosure as the hydraulic pump and electric motor are driven in the damping mode as well as the active mode, and as such these components of the system will be in use for a considerably larger period of time than prior art systems. Therefore using highly reliable components ensures that the system will have a sufficiently large lifespan. Additionally, in another set of examples, the electric motor and hydraulic pump may be chosen specifically for their operating properties, for example the risk of jamming occurring. This is particularly important as it could be problematic if the hydraulic pump and/or the electric motor jams during either mode of operation, but particularly during the damping mode of operation as it may prevent motion of the hydraulic actuator. This may be problematic, for example when the hydraulic actuator is used to control a steering flap on an aircraft wing.

It has been appreciated by the Applicant that when providing a system in accordance with the present disclosure that the pump must be able to be driven by the hydraulic fluid, even when only a small external force is applied to the hydraulic actuator. Therefore, in a set of examples the hydraulic pump within the system is chosen so as to be suitable to be driven by hydraulic fluid passing through the hydraulic pump at relatively low pressures. Appropriate hydraulic pumps may include rotary pumps, for example rotary piston, bent axis, radial piston or gear pumps. Preferably the hydraulic pump is chosen so as to be able to operate in a bidirectional manner, i.e. it can be used to drive fluid in two different directions and be operated in reverse with fluid flowing from either direction, i.e. fluid flowing from either direction can drive the pump.

There is also disclosed herein an electro hydrostatic actuator (EHA) comprising: a reversible hydraulic pump and an electric motor driving the hydraulic pump to supply hydraulic fluid through a hydraulic fluid circuit to a hydraulic actuator; the hydraulic pump comprising an inlet and an outlet for hydraulic fluid such that, in an active mode of operation when the pump is driven by the electric motor, hydraulic fluid is actively drawn in through the inlet and exhausted out through the outlet; and a flow path arranged such that, in a damping mode of operation, when the hydraulic actuator is driven by an external force, hydraulic fluid is forced through an inlet of the hydraulic pump and is exhausted through an outlet of the hydraulic pump which causes relative motion of the hydraulic pump which drives the electric motor; the electric motor further comprising an external electrical circuit, arranged such that any electrical energy generated by the electric motor when the electric motor is driven by the hydraulic pump in the damping mode of operation, is consumed by the external electrical circuit to provide a desired amount of damping to be applied to the hydraulic actuator.

As discussed above, in a set of examples the external electrical circuit comprises one or more electrical resistance elements.

In such examples, the external electrical circuit may comprise one or more electrical resistance elements with a fixed electrical resistance.

In such examples, the external electrical circuit may comprise one or more electrical resistance elements with a variable electrical resistance.

In another set of examples, in addition or alternatively, the external electrical circuit comprises one or more electrical energy storage elements.

In another set of examples, the external electrical circuit comprises electronic control circuitry arranged to measure electrical energy produced by the electric motor.

In a further set of examples the electronic control circuitry is arranged so as to provide suitable electrical energy consuming means.

The electronic control circuitry is arranged so as to be powered by electrical energy generated by the electric motor.

In a set of examples, the external electrical circuit provides a non-linear consumption of electrical energy generated by the electrical motor. It will be appreciated that this will subsequently provide a non-linear amount of damping.

In a set of examples, the external electrical circuit comprises means for adding further components. This may be advantageous as it may be possible to add further electrical components to the circuit to adjust the amount of damping.

In a set of examples the electric motor and hydraulic pump are bidirectional. It will be appreciated that such a set of examples is particularly advantageous as it allows the hydraulic actuator to be damped whichever direction it is being forced to move in. In another set of examples the electric motor and hydraulic pump are highly reliable.

In a set of examples the hydraulic pump is a rotary gear or piston (radial, axial or bent axis) pump. According to the EHA architecture, it is necessary that the pump can be operated in reverse. There are various ways in which reverse operation of the pump can be ensured, for example by choosing a particular cam angle or bend axis angle of a rotary piston pump that allows the pump to operate in a reverse manner.

### Brief description of drawings

One or more non-limiting examples will now be described, with reference to the accompanying drawings, in which:
Fig. 1 shows a fluid flow diagram for an EHA in an active mode according to the prior art;
Fig. 2 shows a fluid flow diagram for an EHA in a damping mode according to the prior art;
Fig. 3 shows a fluid flow diagram for an EHA in an active mode according to the present disclosure; and
Fig. 4 shows a fluid flow diagram for an EHA in a damping mode according to the present disclosure.

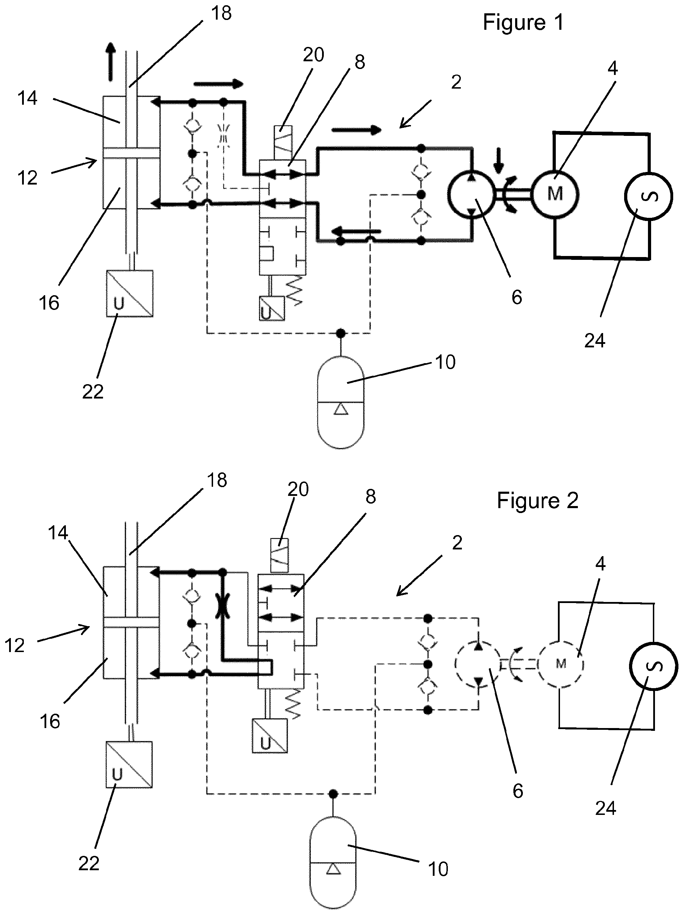

Figures 1 and 2 show a fluid flow diagram for an electro hydrostatic actuator (EHA) 2 according to the prior art. Figure 1 shows an electric motor 4, a hydraulic pump 6, a mode valve 8, an accumulator 10 and a hydraulic actuator 12. The hydraulic actuator 12 shown in Figure 1 consists of two separate chambers 14, 16 and an actuator ram 18. The mode valve 8 can be operated by a solenoid 20 and has two modes of operation which is typically on or off. The ram 18 is typically attached to a component on the aircraft such as an aerodynamic surface. A linear transducer 22 which is connected to the ram 18 signals when the ram 18 is in use. The EHA typically has two modes of operation: an Electric Active Mode (EAM) and a damping mode. Figure 1 shows the EHA in EAM. During EAM the motor 4 is energised by the power supply 24 and acts to drive the pump 6. As the pump 6 is driven it causes hydraulic fluid to flow around a circuit as shown by the bold lines and the arrows in Figure 1. This results in fluid being directed into one of the chambers 14, 16 of the hydraulic actuator 12. As fluid enters one of the chambers 14, 16 and leaves the other chamber 14, 16 this causes the ram 18 to move within the chambers 14, 16 which acts to move the aerodynamic surface it is attached to.

Figure 2 shows a fluid flow diagram for the EHA 2 in damping mode. The damping mode can be initiated in circumstances where there is an electrical power generation failure, i.e. the electric motor 4 is not energised by the power supply 24, or electronic control path failure. The solenoid 20 is capable of activating the mode valve 8 which alters the fluid flow within the system. The damping mode introduces a damping effect to the ram 18. This may be critical for certain applications of an EHA for example when in use on an aircraft. The damping mode is also the default mode when the ram 18 is not required to be engaged i.e. the pump 6 is not driven by the motor 4. The purpose of the damping mode is to provide a damping force to the ram 18 which may be connected to an aerodynamic surface, this prevents uncontrolled motion when external aerodynamic forces are applied to the surface.

In the damping mode, fluid is free to flow between one chamber 14, 16 through the mode valve 8 and to the other chamber 14, 16 of the hydraulic actuator 12. The free flow of fluid between the two chambers 14, 16 acts to damp the motion of the ram 18. During the damping mode the fluid completely bypasses the pump 6 and only travels through the mode valve 8. The damping effect on the ram 18 is fixed by the mode valve 8.

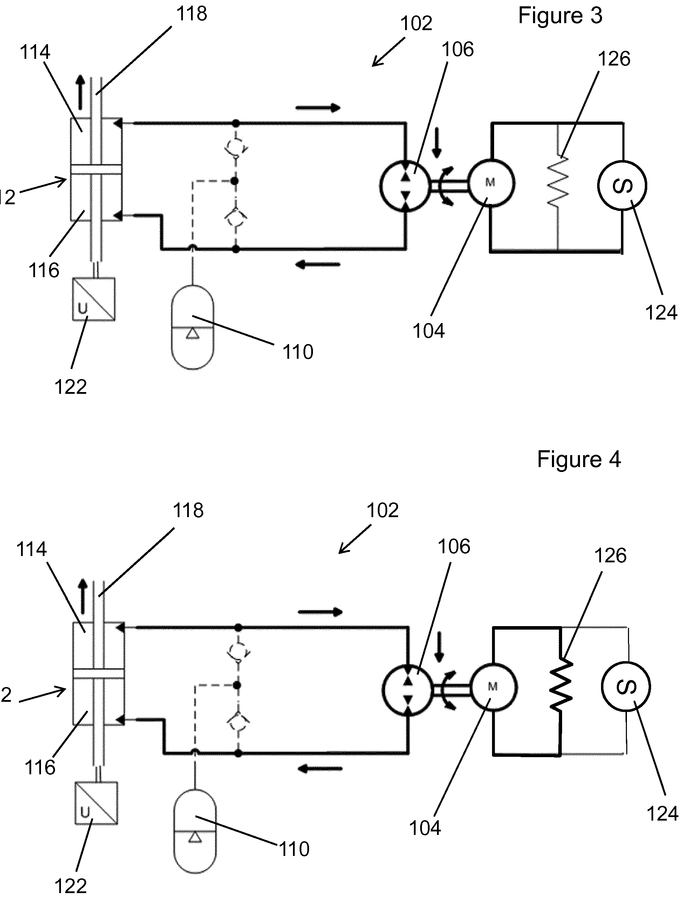

Figures 3 and 4 show exemplary fluid flow diagrams of an EHA 102 according to the present disclosure. Instead of the damping mode being achieved by having a mode valve separate to the pump, the damping mode is now provided by allowing the fluid within the system to drive a reversible and bi-directional pump 106 connected to a motor 104 which provides a desired damping effect. A reversible electric motor 104 is operatively connected to the pump 106. An energy consuming circuit is connected external to the motor 104. In this example, the energy consuming circuit comprises an electrical resistor 126 connected in parallel with the motor power supply 124. Similarly to the embodiment seen in Figures 1 and 2 the EHA 102 also comprises an accumulator 110.

In Figure 3 the system is shown in an Electric Active Mode (EAM). During the EAM the motor 104 is energised with electrical power from the power supply 124. This may be an A.C. power supply as depicted in Figures 3 and 4 or alternative it may be a D.C. power supply. When energised with electrical power, the motor 104 drives the pump 106 so as to drive fluid around between the chambers 114, 116 of the hydraulic actuator 112 via the fluid path shown in bold and with corresponding arrows. Movement of fluid between the chambers 114, 116 causes movement of the ram 118. A linear transducer 122 which is connected to the ram 118 signals when the ram 118 is in use. During the EAM, electrical power from the power supply 124 bypasses an electrical resistance element 126, connected to the motor 104 and energises the motor 104 directly.

Figure 4 shows the EHA 102 operating in a damping mode. In the damping mode, for example when there is a power supply failure, the motor 104 is no longer energised by the power supply 124. This is depicted in this Figure as the power source 124 is not supplying electrical power (circuit lines are no longer in bold). In this instance, the pump 106 is no longer driven by the motor 104 and ceases to actively move hydraulic fluid around the system. In this damping mode, fluid in each of the actuator's chamber 114, 116 is free to pass through the hydraulic circuit and drive the pump 106. The fluid may for instance enter the pump 106 via an inlet, cause the pump to rotate and exit via its outlet. It is unlikely that fluid will freely flow through the EHA 102 unless a sufficient external force is applied to the ram 118 so as to displace fluid within the chambers 114, 116. This may happen, for example, when the ram 118 operates a surface on an aircraft wing, wherein the passing airflow over the surface may be sufficient to drive the ram 118 so as to move hydraulic fluid from one of its chambers 114, 116 to the other chamber 114, 116. In doing so, fluid will flow through the pump 106 subsequently causing it to rotate. Driving the pump 106 causes the motor 104 to be driven as a result of the operative connection between them. When the motor 104 is driven by the pump the motor 104 effectively acts as a generator and produces energy. If the fluid is moved through the EHA 102 at a sufficient rate then the movement of the motor 104 may be sufficient to generate electricity. As seen in Figure 4, any electrical energy generated by the motor 104 in this damping mode, may be dissipated via the electrical resistance element 126.

Whilst the resistor 126 is depicted as an example of a single electrical energy consuming element, it will be appreciated that the resistor 126 may be replaced by a variety of different circuit components. For example a non-exhaustive list of possible elements may include a plurality of resistors in series, a plurality of resistors in parallel and one or more variable resistors. Furthermore, in other examples such external electrical energy consuming element(s) may be replaced by alternative energy consuming means, such as energy dissipation components in the motor itself and/or electrical energy storage elements. Of course any suitable combination of one or more different energy consuming elements may be designed to provide the desired amount of damping to be applied to the hydraulic actuator in any given application.

Whilst in this description the pump 106 is described as rotating as a result of the hydraulic fluid passing through it, it will be appreciated that this may not always be the case and this may depend on the type of pump which is used. For example, the pump 106 may be caused to reciprocate as a result of hydraulic fluid driving its motion. Irrespective of the motion of the pump after it is driven by the hydraulic fluid it will be appreciated that this motion can be converted appropriately so as to drive the electric motor 104.

## Claims

1. A method for controlling and damping the motion of a hydraulic actuator (112) in an electro hydrostatic actuator (EHA) system (102) comprising an electric motor (104), a hydraulic pump (106) and a hydraulic fluid circuit connecting the hydraulic pump (106) and the hydraulic actuator (112), the method comprising:
energising the electric motor (104) to drive the hydraulic pump (106) to supply hydraulic fluid to the hydraulic actuator (112) through the hydraulic fluid circuit in an active mode of operation;
providing a flow path between the hydraulic actuator (112) and the hydraulic pump (106) in a damping mode of operation, in the case of a system failure, such that hydraulic fluid can flow through the hydraulic pump (106) when the hydraulic actuator (112) is driven by an external force; the electric motor (104) effectively acting as a generator when it is driven by the hydraulic pump (106);
determining a desired amount of damping to be applied to the hydraulic actuator (112) in the damping mode of operation;
wherein determining the desired amount of damping comprises determining the force which is applied to the hydraulic actuator (112) by measuring the electrical energy generated by the electric motor (104) which comprises using electronic control circuitry arranged to measure the electrical energy generated, wherein providing the electronic control circuitry comprises arranging components of the electronic control circuitry so as to be powered by the electrical energy generated by the electric motor (104); and
subsequently providing the electric motor (104) with one or more energy consuming means (126) configured to provide the desired amount of damping, such that in the damping mode of operation when the hydraulic actuator (112) is driven by an external force, the hydraulic fluid flowing via the flow path through the hydraulic pump (106) causes the hydraulic pump (106) to drive the electrical motor (104) so as to generate energy which is consumed by the energy consuming means (126).

2. A method according to claim 1, wherein providing the one or more energy consuming means (126) comprises choosing one or more electrical resistance elements (126).

3. A method according to claim 2, wherein choosing the one or more electrical resistance elements (126) comprises choosing one or more electrical resistance elements with a fixed resistance.

4. A method according to claim 2 or 3, wherein choosing the one or more resistance elements (126) comprises choosing one or more electrical resistance elements with a variable resistance.

5. A method according to claim 4, comprising changing the resistance of the one or more electrical resistance elements (126) depending on the desired degree of damping.

6. A method according to any preceding claim, wherein providing the one or more energy consuming means (126) comprises connecting an external electrical circuit to the motor.

7. A method according to any preceding claim, wherein providing the one or more energy consuming means comprises designing electromagnetic losses within one or more components of the electric motor to provide the desired amount of damping.

8. A method according to any preceding claim, wherein providing the one or more energy consuming elements comprises choosing standard components of the electric motor which provide the desired amount of damping.

9. A method according to any preceding claim, wherein providing the one or more energy consuming means comprises choosing one or more components capable of storing electrical energy.

10. A method according to claim 9, further comprising using electrical energy stored in the components to energise the electric motor (104) in the active mode of operation.

11. A method according to any preceding claim, wherein determining the desired amount of damping and providing one or more energy consuming means (126) is carried out during manufacture of the system (102) or prior to use of the hydraulic actuator (112) in a specific application or during use of the hydraulic actuator (112).

12. A method according to any preceding claim, wherein controlling and damping the hydraulic actuator (112) comprises operating the system (102) only in the active mode of operation or the damping mode of operation.

## Patentansprüche

1. Verfahren zum Steuern und Dämpfen der Bewegung eines hydraulischen Aktuators (112) in einem System (102) elektrohydrostatischer Aktuatoren (EHA), umfassend einen Elektromotor (104), eine Hydraulikpumpe (106) und einen Hydraulikflüssigkeitskreislauf, der die Hydraulikpumpe (106) und den hydraulischen Aktuator (112) verbindet, wobei das Verfahren umfasst:
Versorgen des Elektromotors (104) mit Energie dazu, die Hydraulikpumpe (106) anzutreiben, um dem hydraulischen Aktuator (112) über den Hydraulikflüssigkeitskreislauf in einem aktiven Betriebsmodus Hydraulikflüssigkeit zuzuführen;
Bereitstellen eines Fließwegs zwischen dem hydraulischen Aktuator (112) und der Hydraulikpumpe (106) in einem dämpfenden Betriebsmodus, bei einem Systemausfall, sodass die Hydraulikflüssigkeit durch die Hydraulikpumpe (106) fließen kann, wenn der hydraulische Aktuator (112) von einer externen Kraft angetrieben wird; wobei der Elektromotor (104) praktisch als ein Generator fungiert, wenn er von der Hydraulikpumpe (106) angetrieben wird;
Bestimmen einer gewünschten Menge an Dämpfung dazu, auf den hydraulischen Aktuator (112) im dämpfenden Betriebsmodus angewendet zu werden;
wobei das Bestimmen der gewünschten Menge an Dämpfung das Bestimmen der Kraft umfasst, die auf den hydraulischen Aktuator (112) angewendet wird, indem die vom Elektromotor (104) erzeugte elektrische Energie gemessen wird, was die Verwendung einer elektronischen Steuerschaltung umfasst, die dazu angeordnet ist, die erzeugte elektrische Energie zu messen, wobei das Bereitstellen der elektronischen Steuerschaltung umfasst, dass Komponenten der elektronischen Steuerschaltung so angeordnet werden, dass sie von der elektrischen Energie betrieben werden, die vom Elektromotor (104) erzeugt wird; und
nachfolgend Bereitstellen von einem oder mehreren energieverbrauchenden Mitteln (126) an den Elektromotor (104), die dazu konfiguriert sind, die gewünschte Menge an Dämpfung bereitzustellen, sodass im dämpfenden Betriebsmodus, wenn der hydraulische Aktuator (112) von einer externen Kraft angetrieben wird, die Hydraulikflüssigkeit, die über den Fließweg durch die Hydraulikpumpe (106) fließt, bewirkt, dass die Hydraulikpumpe (106) den Elektromotor (104) antreibt, sodass Energie erzeugt wird, die vom energieverbrauchenden Mittel (126) verbraucht wird.

2. Verfahren nach Anspruch 1, wobei das Bereitstellen des einen oder der mehreren energieverbrauchenden Mittel (126) umfasst, dass ein oder mehrere elektrische Widerstandselemente (126) ausgewählt werden.

3. Verfahren nach Anspruch 2, wobei das Auswählen des einen oder der mehreren elektrischen Widerstandselemente (126) umfasst, dass ein oder mehrere elektrische Widerstandselemente mit einem Festwiderstand ausgewählt werden.

4. Verfahren nach Anspruch 2 oder 3, wobei das Auswählen des einen oder der mehreren elektrischen Widerstandselemente (126) umfasst, dass ein oder mehrere elektrische Widerstandselemente mit einem veränderlichen Widerstand ausgewählt werden.

5. Verfahren nach Anspruch 4, die Änderung des Widerstands von dem einen oder den mehreren elektrischen Widerstandselementen (126) umfassend, abhängig von dem gewünschten Dämpfungsgrad.

6. Verfahren nach einem der vorhergehenden Ansprüche, wobei das Bereitstellen des einen oder der mehreren energieverbrauchenden Mittel (126) umfasst, dass eine externe elektrische Schaltung an den Motor angeschlossen wird.

7. Verfahren nach einem der vorhergehenden Ansprüche, wobei das Bereitstellen des einen oder der mehreren energieverbrauchenden Mittel umfasst, dass elektromagnetische Verluste innerhalb von einer oder mehreren Komponenten des Elektromotors dazu ausgestaltet werden, den gewünschten Dämpfungsgrad bereitzustellen.

8. Verfahren nach einem der vorhergehenden Ansprüche, wobei das Bereitstellen des einen oder der mehreren energieverbrauchenden Elemente umfasst, dass Standardkomponenten des Elektromotors ausgewählt werden, die den gewünschten Dämpfungsgrad bereitstellen.

9. Verfahren nach einem der vorhergehenden Ansprüche, wobei das Bereitstellen des einen oder der mehreren energieverbrauchenden Mittel umfasst, dass eine oder mehrere Komponenten ausgewählt werden, die elektrische Energie speichern können.

10. Verfahren nach Anspruch 9, ferner umfassend die Verwendung von in den Komponenten gespeicherter elektrischer Energie, um den Elektromotor (104) im aktiven Betriebsmodus mit Energie zu versorgen.

11. Verfahren nach einem der vorhergehenden Ansprüche, wobei das Bestimmen der gewünschten Menge an Dämpfung und das Bereitstellen des einen oder der mehreren energieverbrauchenden Mittel (126) während der Herstellung des Systems (102) oder vor der Verwendung des hydraulischen Aktuators (112) in einer bestimmten Anwendung oder während der Verwendung des hydraulischen Aktuators (112) durchgeführt wird.

12. Verfahren nach einem der vorhergehenden Ansprüche, wobei das Steuern und Dämpfen des hydraulischen Aktuators (112) umfasst, dass das System (102) nur im aktiven Betriebsmodus oder im Dämpfungs-Betriebsmodus betrieben wird.

## Revendications

1. Procédé pour commander et amortir le mouvement d'un actionneur hydraulique (112) dans un système d'actionneur électro-hydrostatique (EHA) (102) comprenant un moteur électrique (104), une pompe hydraulique (106) et un circuit de fluide hydraulique reliant la pompe hydraulique (106) et l'actionneur hydraulique (112), le procédé comprenant :
la mise sous tension du moteur électrique (104) pour entraîner la pompe hydraulique (106) afin de fournir du fluide hydraulique à l'actionneur hydraulique (112) à travers le circuit de fluide hydraulique dans un mode de fonctionnement actif ;
la fourniture d'un trajet d'écoulement entre l'actionneur hydraulique (112) et la pompe hydraulique (106) dans un mode de fonctionnement d'amortissement, dans le cas d'une défaillance du système, de sorte que le fluide hydraulique peut s'écouler à travers la pompe hydraulique (106) lorsque l'actionneur hydraulique (112) est entraîné par une force externe ; le moteur électrique (104) agissant efficacement en tant que générateur lorsqu'il est entraîné par la pompe hydraulique (106) ;
la détermination d'une quantité d'amortissement souhaitée à appliquer à l'actionneur hydraulique (112) dans le mode de fonctionnement d'amortissement ;
dans lequel la détermination de la quantité d'amortissement souhaitée comprend la détermination de la force qui est appliquée à l'actionneur hydraulique (112) en mesurant l'énergie électrique générée par le moteur électrique (104) qui comprend l'utilisation d'un circuit de commande électronique agencé pour mesurer l'énergie électrique générée, dans lequel la fourniture du circuit de commande électronique comprend l'agencement de composants du circuit de commande électronique de manière à être alimentés par l'énergie électrique générée par le moteur électrique (104) ; et
la fourniture ensuite au moteur électrique (104) d'un ou de plusieurs moyens de consommation d'énergie (126) configurés pour fournir la quantité d'amortissement souhaitée, de sorte que dans le mode de fonctionnement d'amortissement lorsque l'actionneur hydraulique (112) est entraîné par une force externe, le fluide hydraulique s'écoulant par l'intermédiaire du trajet d'écoulement à travers la pompe hydraulique (106) amène la pompe hydraulique (106) à entraîner le moteur électrique (104) de manière à générer de l'énergie qui est consommée par les moyens de consommation d'énergie (126).

2. Procédé selon la revendication 1, dans lequel la fourniture des un ou plusieurs moyens de consommation d'énergie (126) comprend le choix d'un ou de plusieurs éléments de résistance électrique (126).

3. Procédé selon la revendication 2, dans lequel le choix des un ou plusieurs éléments de résistance électrique (126) comprend le choix d'un ou de plusieurs éléments de résistance électrique avec une résistance fixe.

4. Procédé selon la revendication 2 ou 3, dans lequel le choix des un ou plusieurs éléments de résistance électrique (126) comprend le choix d'un ou de plusieurs éléments de résistance électrique avec une résistance variable.

5. Procédé selon la revendication 4, comprenant le changement de la résistance des un ou plusieurs éléments de résistance électrique (126) en fonction du degré d'amortissement souhaité.

6. Procédé selon une quelconque revendication précédente, dans lequel la fourniture des un ou plusieurs moyens de consommation d'énergie (126) comprend le raccordement d'un circuit électrique externe au moteur.

7. Procédé selon une quelconque revendication précédente, dans lequel la fourniture des un ou plusieurs moyens de consommation d'énergie comprend la conception de pertes électromagnétiques à l'intérieur d'un ou de plusieurs composants du moteur électrique pour fournir la quantité d'amortissement souhaitée.

8. Procédé selon une quelconque revendication précédente, dans lequel la fourniture des un ou plusieurs éléments consommateurs d'énergie comprend le choix de composants standard du moteur électrique qui fournissent la quantité d'amortissement souhaitée.

9. Procédé selon une quelconque revendication précédente, dans lequel la fourniture des un ou plusieurs moyens de consommation d'énergie comprend le choix d'un ou de plusieurs composants capables de stocker de l'énergie électrique.

10. Procédé selon la revendication 9, comprenant en outre l'utilisation de l'énergie électrique stockée dans les composants pour mettre le moteur électrique (104) sous tension dans le mode de fonctionnement actif.

11. Procédé selon une quelconque revendication précédente, dans lequel la détermination de la quantité d'amortissement souhaitée et la fourniture d'un ou de plusieurs moyens de consommation d'énergie (126) est effectuée pendant la fabrication du système (102) ou avant l'utilisation de l'actionneur hydraulique (112) dans une application spécifique ou lors de l'utilisation de l'actionneur hydraulique (112).

12. Procédé selon une quelconque revendication précédente, dans lequel la commande et l'amortissement de l'actionneur hydraulique (112) comprend le fonctionnement du système (102) uniquement dans le mode de fonctionnement actif ou dans le mode de fonctionnement d'amortissement.
